# EUROPÄISCHE PATENTANMELDUNG

(11) **EP 0 774 413 A1**
(43) Veröffentlichungstag der Anmeldung: **21.05.1997**
(21) Anmeldenummer: 96118263.1
(22) Anmeldetag: 14.11.1996
(51) Int. Cl.: B65B 11/04, A01F 15/07, B65H 18/22

(54) **Wickeltisch und Müllverpackungsanlage**

(30) Priorität: 15.11.1995 DE 19542645
(71) Anmelder: Altvater RPP 1200 GmbH, 76275 Ettlingen (DE)
(72) Erfinder: Rampp, Erwin, 87787 Wolfertschwenden (DE)
(74) Vertreter: Füchsle, Klaus, Dipl.-Ing.

(57) **Zusammenfassung**

Die Erfindung betrifft einen Wickeltisch zum Aufnehmen und Drehen eines zu umwickelnden Rundballens (10) mit einem antreibbaren Endlosband (11), das eine Auflagefläche zur Auflage des Rundballens (10) bildet und mit zumindest einem unterhalb der Auflagefläche angeordneten Stützelement (20, 21) versehen ist, das bewegbar gestaltet ist, wodurch die Auflagefläche auch muldenförmig ausbildbar ist, oder bei dem eine Auswahl von Walzen beabstandet voneinander angeordnet sind, die zur Bildung einer auch muldenförmig ausbildbaren Auflagefläche bewegbar sind.

Des weiteren betrifft die Erfindung eine Müllverpackungsanlage mit einem derartigen Wickeltisch (8).

## Beschreibung

Die Erfindung betrifft eine Wickeltisch zum Aufnehmen und Drehen eines zu umwickelnden Rundballens sowie eine Müllverpackungsanlage mit einem derartigen Wickeltisch.

Der Transport, die Aufbewahrung und Entsorgung von Müll, insbesondere Hausmüll, Bio-Müll, Klärschlamm oder andere Abfallstoffe, kann heutzutage durch Pressen in zylinderförmige oder zylinderabschnittsförmige Müllballen und vollständiger Umwicklung in eine Folie räumlich, zeitlich und mengenmäßig optimiert werden. Zum Umwickeln eines beispielsweise in einer Rundballenpresse gepreßten Müllballens mit einer dehnbaren Folie ist ein Wickeltisch der genannten Art verwendbar. Ein derartiger Wickeltisch arbeitet zusammen mit einer darüber angeordneten Wicklungsvorrichtung. Entweder ist die Wicklungsvorrichtung drehbar, so daß die Folie um den Rundballen gewickelt werden kann, während der Rundballen auf dem Wickeltisch um seine Zylinderachse gedreht wird, oder der Wickeltisch dreht sich um eine vertikale Drehachse und gleichzeitig wird der Rundballen auf dem Wickeltisch um seine horizontale Achse gedreht.

Aus der Landwirtschaft ist die Verwendung eines Silageballenwickler bekannt, mit dem Heu, Gras oder dergleichen in Form eines gepreßten Rundballens vollständig mit einer dehnbaren Folie umwickelt werden kann. So ist in der DE-PS 38 33 988 ein als Anbaugerät an einem Schlepper vorgesehener Silageballenwickler offenbart, der einen aus einer bodenparallelen Einrichtung zur Aufnahme eines mit der Mantelfläche auf dem Boden aufliegenden Silageballens vom Boden zur Lagerung und Drehung des Ballens um seine Zylinderachse bestehenden Wickeltisch aufweist. Der Wickeltisch wird aus einer Anzahl zylindrischer, im Querschnitt gesehen auf einem Kreisbogen liegenden und an der Mantelfläche des Ballens in Längsrichtung anliegenden drehbaren Rundstäben gebildet, die den Ballen an achsenparallelen Linien der Mantelfläche abstützen. Aufgrund der durch die drehbaren Rundstäbe gebildeten vorgegebenen Aufnahmemulde für den Rundballen erfolgt die Aufnahme wie auch die Abgabe des umwickelten Rundballens nicht ruckfrei. Aufgrund dessen kann an einem aus der Rundballenpresse zugeführter, lediglich auf der Mantelfläche mit einer Netzbahn umwickelte Rundballen beim Aufnahmevorgang auf den Wickeltisch Material verlieren. Beim Abgabevorgang vom Wickeltisch ist die Beschädigungsgefahr der aufgebrachten Folie erhöht.

Insbesondere bei der Umwicklung eines aus Müllbestandteilen gepreßten Rundballens ist eine Verschmutzung aufgrund Materialverlustes beim Aufnahmevorgang, wie auch die Beschädigung der Folie beim Abgabevorgang zu vermeiden. Die Beschädigung der Folie würde eine Lagerung des darin eingewickelten Mülls auf einer nicht abgedichteten Lagerfläche verbieten, da ansonsten möglicherweise umweltschädliche Substanzen aus dem umwickelten, aber beschädigten Rundballen in den Boden versickern oder ebtweichen könnten.

Der Erfindung liegt das technische Problem zugrunde, einen Wickeltisch und eine Müllverpackungsanlage zu schaffen, bei der Materialverlust eines gepreßten Rundballens bzw. die Beschädigung der zur Umwicklung des gepreßten Rundballens dienenden Folie vermindert wird.

Dieses technische Problem wird mit einem Wickeltisch zum Aufnehmen und Drehen mit einer Folie eines zu umwickelnden Rundballens gelöst, der mit einem antreibbaren Endloselement versehen ist, das eine Auflagefläche zur Auflage des Rundballens bildet und bei dem zumindest ein unterhalb der Auflagefläche angeordnetes Stützelement bewegbar gestaltet ist, wodurch die Auflagefläche auch muldenförmig ausbildbar ist, oder bei dem eine Anzahl von beabstandeten Walzen vorgesehen ist, die zur Bildung einer auch muldenförmig ausbildbaren Auflagefläche bewegbar sind.

Der Erfindung liegt der Gedanke zugrunde, die Aufnahme und Abgabe eines Rundballens durch eine steuerbare Veränderung der Auflagefläche sanft und ruckfrei vorzunehmen. Indem zur Aufnahme des Rundballens die Auflagefläche im wesentlichen eben ausgebildet ist, und dann eine muldenförmige Vertiefung durch beispielsweise Absenken zumindest eines darunterliegenden Stützelementes erzielt wird, kann der auf der Auflagefläche aufgebrachte Rundballen sehr gleichmäßig und gesteuert in die zur Umwicklung mit der Folie notwendige Drehlage überführt werden. Dabei erfüllt das Endloselement eine Doppelfunktion. Zum einen wird das angetriebene Band beim Aufnahmevorgang wie auch beim Abgabevorgang zum Transport des Müllballens in die Mitte des Wickeltisches benutzt. Zum anderen wird durch die muldenförmige Vertiefung der Rundballen sicher in einer Drehlage gehalten, und durch Antreiben des Endloselementes in eine Drehung um seine Zylinderachse versetzt, wodurch eine vollständige Umwicklung mit einer Folie erreicht wird. Bei der Anordnung nur mit voneinander beabstandeten Walzen erfolgt die Aufnahme wie auch die Abgabe eines Rundballens durch Antreiben zumindest einer Walze und verschieden tiefes Absenken bzw. Hochdrücken einer Anzahl in der Mitte des Wickeltisches angeordneter Walzen.

Eine sehr einfache Ausführung des Endloselementes ist durch ein Endlosband, insbesondere eines Förderbandes geschaffen. Es sind auch Kettenförderbänder oder dergleichen verwendbar.

Indem das Stützelement eine Stützwalze ist, das anheb- und absenkbar gelagert ist, kann auf einfache Art und Weise die durch das Endloselement gebildete Auflagefläche in der gewünschten Art und Weise verformt werden.

Eine vorteilhafte Ausführungsform ist dadurch gekennzeichnet, daß das Stützelement an der der Auflagefläche gegenüberliegenden unteren Laufseite anliegt und durch um einen von der Drehachse der Walze beabstandeten Drehpunkt schwenkbar ist. Dadurch kann der Aufnahme- wie auch der Abgabevorgang des auf der Auflagefläche liegenden Rundballens ruckfrei in die zur Umwicklung mit einer Folie notwendige muldenförmige Vertiefung überführt werden. Durch das Verschwenken der Stützwalze wandert der Auflagepunkt zur Mitte des Wickeltisches hin, wodurch der Rundballen langsam und gesteuert in die gleichzeitig gebildete muldenförmige Vertiefung des Endloselementes überführt wird.

Mittels zumindest eines Stellzylinders, insbesondere eines pneumatisch oder hydraulisch betreibbaren Stellzylinders, kann mit einfachen technischen Mitteln die muldenförmige Vertiefung gesteuert ausgebildet werden.

Indem zwei voneinander beabstandete Stützelemente unterhalb der Auflagefläche angeordnet sind, deren Verschwenkachsen auf einander gegenüberliegenden Seiten angeordnet sind, ist es erstmals möglich, das Ein- und Ausbringen des Rundballens in die muldenförmige Vertiefung sanfter auszuführen. Dadurch, daß die Stützelemente unabhängig voneinander bewegbar sind, kann beim Einbringvorgang das der der Einbringrichtung zugewandte Stützelement zuerst abgesenkt werden, wodurch der auf der Auflagefläche liegende Rundballen sicher in einer kleineren Vertiefung aufliegt, bis das zweite Stützelement abgesenkt wird. Durch Heraufbewegen des der Ausbringrichtung abgewandten Stützelementes erfolgt eine sanfte Ausrollbewegung des auf der Auflagefläche liegenden Rundballens, die dann durch Bewegen des anderen Stützelementes zusätzlich unterstützt wird.

Das Endloselement bzw. Endlosband kann elastisch sein. Aufgrund der teilweise sehr hohen Massen der gepreßten Rundballen ist es jedoch vorteilhaft, wenn das Endlosband keine sehr große Dehnfähigkeit aufweist. Bei einer derartigen Ausführungsform ist zumindest eine Längenausgleichseinrichtung für das Endlosband sehr vorteilhaft.

Eine bevorzugte Ausführungsform der Längenausgleichseinrichtung weist zumindest eine an der Auflagefläche anliegende, bewegbare Spannwalze auf.

Durch Steuerung der Längenausgleichseinrichtung in Abhängigkeit der Stellung des Stützelementes ist eine gewünschte Anlegespannung des Endlosbandes an den Umlenkwalzen in Abhängigkeit der muldenförmigen Ausbildung möglich.

Eine weitere bevorzugte Ausführungsform des Wickeltisches weist einen unteren stationären und einen oberen bewegbaren Rahmen auf, zwischen denen zumindest ein zur Messung der Auflagekraft dienendes Meßelement angeordnet ist. Aufgrund dieser Ausführung kann beim Aufnahmevorgang und auch beim Abgabevorgang des Rundballens dessen Gewichtskraft gemessen werden.

Es wird insbesondere bevorzugt, daß an mehreren voneinander beabstandeten Positionen jeweils ein Meßelement angeordnet ist, wobei die muldenförmige Vertiefung zwischen den Meßelementen ausbildbar ist. Damit ist einerseits wiederum die Gewichtskraft des auf dem Endlosband liegenden Rundballens meßbar. Zum anderen kann jedoch aufgrund der unterschiedlichen Positionen der Meßelemente und der darauf wirkenden unterschiedlichen Gewichtskräfte die Lageposition des Rundballens auf dem Auflageband genauestens ermittelt und in Abhängigkeit von der ermittelten Lage die Bewegung des Stützelementes gesteuert werden.

Durch Ausführung der Meßelemente als DMS-Wägezellen ist eine kostengünstige und zuverlässige Ermittlung der Gewichtskraft wie auch der Lageposition des Rundballens auf dem Endlosband möglich.

In dem der gesamte Wickeltisch horizontal bewegbar ausgestaltet ist, kann die Überführung eines aus einer Preßstation kommenden Rundballens zu einer Wickelstation wie auch die Überführung von der Wickelstation zu einer Ausgabestation mit ein und demselben Wickeltisch erfolgen.

Vorteilhafterweise sind Winkelkodierer am Ausleger und am Wickeltisch angeordnet. Mittels dieser Winkelkodierer können eben die zum Einstellen des Überdeckungsgrads notwendigen Parameter erfaßt werden. Des weiteren ist es hierdurch jedoch auch ermöglicht, die Abschneideposition für die Folie genau festzulegen, so daß die am Rundballen noch anzubringende Restfahne der Folie in vorbestimmter Weise an einer genau festgelegten Position endet. Zudem erlaubt es die Anordnung der Winkelkodierer, die Wechselposition für eine neue Folienrolle genau anzufahren. Beispielsweise kann somit ein automatischer Austausch einer Folienrolle in einer vorbestimmten Position erfolgen.

Insbesondere ist ein inkrementaler Winkelkodierer an einem Antriebsmotor des Auslegers befestigt, der die Motordrehzahl und damit die Drehgeschwindigkeit des Auslegers mißt. Die Drehgeschwindigkeitsänderung des Auslegers erfolgt durch den inkrementalen Winkelkodierer im geschlossenen Kreislauf. Der weitere Winkelkodierer an der Wickelungsvorrichtung ist ein Absolutgeber, der direkt auf die Drehachse des Auslegers montiert ist und die Position des Auslegers an die Steuerung meldet. Dadurch ist es möglich, daß die Folie nach dem Wickelvorgang an einer wunschgemäß günstigen Position des Ballens abgeschnitten wird und die Folienenden durch Drehung des Rundballens um eine weitere halbe Drehung angedrückt und festgeklebt werden. Nach dem Verbrauch der Folienrollen macht es der Absolutgeber möglich, daß der Ausleger in eine definierte Folienrollenwechselposition drehbar ist. Ein inkrementaler Winkelkodierer und ein Absolutgeber sind ebenso entsprechend am Winkeltisch angebracht.

Eine erfindungsgemäße Müllverpackungsanlage zum Verpressen von Müll in Form eines Rundballens und dessen Umwicklung mit einer Folie weist eine Eingabestation, Preßstation, Wicklungsstation mit einem Wickeltisch mit ein oder mehreren der genannten Merkmale sowie eine Ausgabestation und Steuerungsstation auf.

Mit Hilfe einer derartigen Müllverpackungsanlage ist eine weitgehend verlustfreie Verpressung von Müll in Form eines Rundballens und dessen vollständiger Umwicklung mit einer dehnbaren Folie erzielbar. Des weiteren ist durch die Ausbildung des Wickeltisches in der genannten Art und Weise eine schonende Behandlung des mit einer Folie umwickelten Rundballens möglich.

Schließlich ist durch die horizontal bewegbare Ausführung des Wickeltisches eine Steigerung der Taktrate möglich.

Im folgenden ist zur weiteren Erläuterung und zum besseren Verständnis der Erfindung ein Ausführungsbeispiel unter Bezugnahme auf die beigefügten Zeichnungen näher beschrieben und erläutert. Es zeigt:
- Fig. 1: eine schematische Seitenansicht einer Müllverpackungsanlage, die mit einem erfindungsgemäßen Wickeltisch ausgestattet ist,
- Fig. 2: eine schematische Querschnittsansicht durch eine Wickelungsstation mit erfindungsgemäßem Wickeltisch,
- Fig. 3: eine schematische Seitenansicht eines erfindungsgemäßen Wickeltisches, und
- Fig. 4: eine Seitenansicht von der in der Fig. 3 dargestellten, gegenüberliegenden Seite des erfindungsgemäßen Wickeltisches.

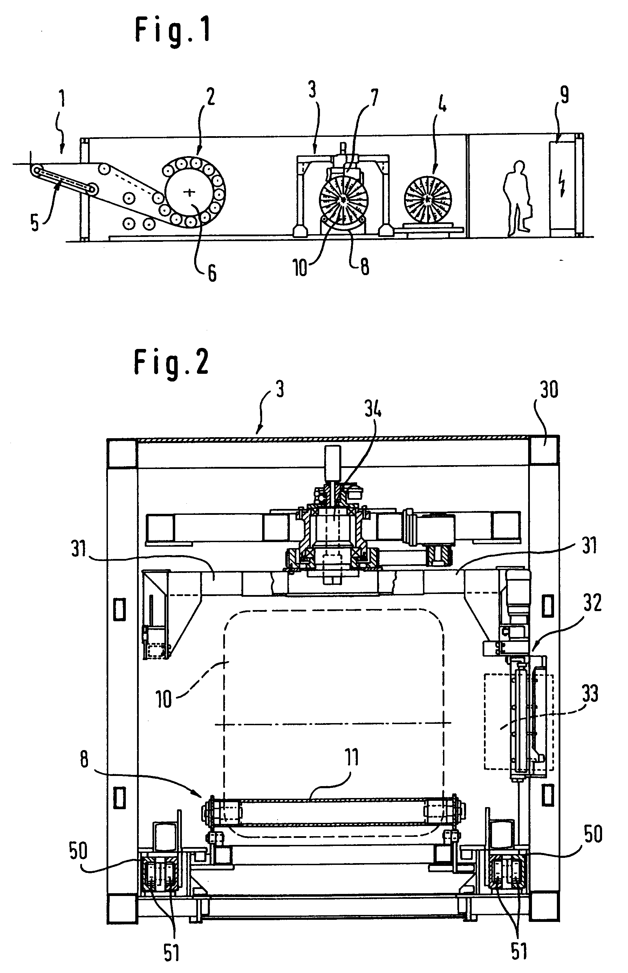

In der Fig. 1 ist eine schematische Seitenansicht einer Müllverpackungsanlage gezeigt. Die Müllverpackungsanlage weist eingangs eine Eingabestation 1 für den zu verpackenden Müll auf. Die Eingabestation 1 ist mit einem Müllaufgabeförderband 5 versehen. An die Eingabestation 1 schließt sich eine Preßstation 2 an, die eine Rundballenpresse 6 umfaßt. Auf die Preßstation 2 folgt eine Wickelungsstation 3, die im wesentlichen aus einer Folienwickelungseinrichtung 7 und einem Wickeltisch 8 besteht. Der Wickelungseinrichtung 7 ist ein Ausgabestation 4 nachgeordnet, von der ein in der Wickelungsstation 3 vollständig mit einer Folie umwickelte Rundballen entnehmbar ist. In der in der Fig. 1 dargestellten schematischen Seitenansicht sind zudem schematisch Steuerungseinrichtungen 9 für die Steuerung für die vorgenannten Einrichtungen gezeigt.

In der Fig. 2 ist eine detailliertere Querschnittsansicht der Wickelungsstation 3 gezeigt. In einem Rahmen 30 ist ein Ausleger 31 um eine Mittelachse drehbar gelagert. An jedem Ende des Auslegers 31 befindet sich eine Folienrollenhalterung 32, in die eine Folienrolle 33 drehbar befestigbar ist. Unterhalb des Auslegers 31 befindet sich ein auf Rollen 51 verschiebbar in Schienen 50 gelagerter Wickeltisch 8. Der Wickeltisch 8 umfaßt ein Endlosband 11, auf dem ein aus der Preßstation 2 ausgegebener, mit einer auf der Mantelfläche umwickelten Netzbahn versehener Rundballen 10 auflegbar ist.

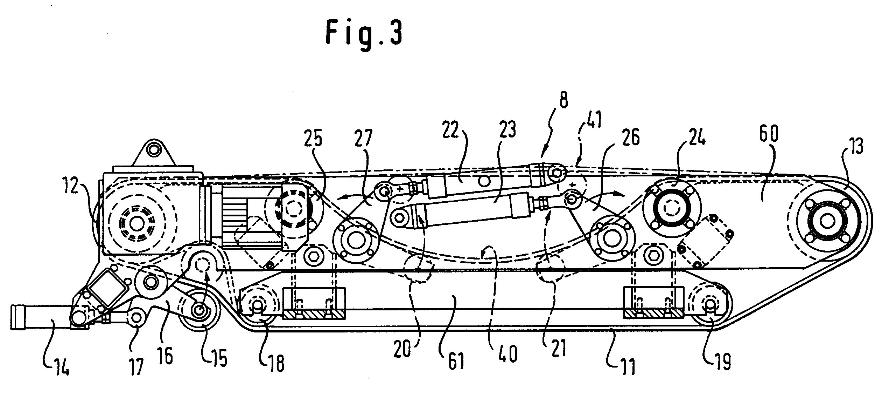

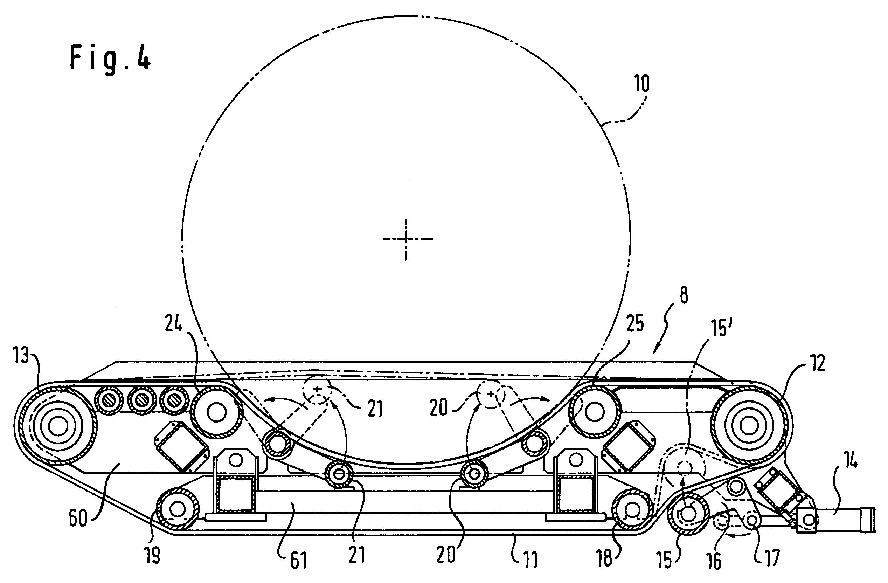

Der Aufbau des Wickeltisches 8 ist aus den folgenden Fig. 3 und 4 besser ersichtlich.

In der Fig. 3 ist eine schematische Seitenansicht des Wickeltisches 8 gezeigt. Das Endlosband 11 läuft um zwei Umlenkwalzen 12, 13, wovon eine angetrieben ist. Zwischen den zwei Umlenkwalzen 12 und 13 sind zwei voneinander beabstandete, stationäre Stützwalzen 24, 25 angeordnet. Zwischen diesen zwei Stützwalzen 24, 25 sind auf der der Auflagefläche gegenüberliegenden Unterseite des Endlosbandes 11 zwei bewegbare Stützwalzen 20, 21 verschwenkbar angeordnet. Jede der Stützwalzen 20, 21 ist an ihrer Stirnseite jeweils mit einem L-förmigen Schwenkhebel 26, 27 versehen. An einem Ende der Schwenkhebel 26, 27 ist jeweils die Stützwalze 20, 21 drehbar gelagert. An dem jeweils anderen Ende der Schwenkhebel 26, 27 ist ein Stellzylinder 22, 23 befestigt.

Die Umlenkwalzen 12, 13, die weiteren Stützwalzen 24, 25 sowie die verschwenkbaren Stützwalzen 20, 21 mit den zugeordneten Schwenkhebeln 26, 27 und Stellzylindern 22 bzw. 23 sind an einem oberen Rahmen 60 befestigt.

An einem unteren Rahmen 61 sind untere Umlenkwalzen 18, 19 sowie eine Längenausgleichseinrichtung angeordnet. Die Längenausgleichseinrichtung umfaßt eine an einem L-förmigen Schwenkhebel 16 drehbar befestigte Spannwalze 15, die an der Außenseite des Endlosbandes 11 anliegt. Ein Stellzylinder 14 ist mittels eines Gelenkkopfes 17 an einem Ende des L-förmigen Schwenkhebels 16 befestigt.

In der Fig. 4 ist eine schematische Seitenansicht des Wickeltisches 8 gemäß Fig. 3 von der anderen Seite aus gesehen dargestellt. Aus dieser Darstellung ist insbesondere der obere Rahmen 60 und der untere Rahmen 61 gut erkennbar. Der obere Rahmen 60 ist gegenüber dem unteren Rahmen 61 vertikal beweglich gelagert. Zwischen den zwei Rahmen 60, 61 sind vier DMS-Wägezellen angeordnet. Die DMS-Wägezellen befinden sich außerhalb der durch die verschwenkbaren Stützwalzen 20, 21 bildbaren muldenförmigen Vertiefung des Endlosbandes 11 an vier gegenüberliegenden Ecken.

Im folgenden wird die Arbeitsweise einer Müllverpackungsanlage gemäß der Fig. 1 und insbesondere die des Wickeltisches 8 näher erläutert.

Auf das Müllaufgabeförderband 5 der Eingabestation 1 wird Müll aufgegeben. Das Müllaufgabeförderband 5 transportiert den darauf liegenden Müll in das Innere der Rundballenpresse 6 der Preßstation 2. Dort wird durch weitere Zufuhr des Mülls ein zylinderförmiger Rundballen 10 gepreßt. In der Preßstation 2 erfolgt dann eine Umwicklung des gepreßten Rundballens 10 mit einer Netzbahn auf der Mantelfläche des Ballens. Sobald dieser Vorgang beendet werden wird, wird der Wickeltisch 8 von der Wicklungsstation 3 zu der Preßstation 2 auf den Rollen 51 verfahren. Daraufhin wird die Rundballenpresse 6 geöffnet. Die Stützrollen 20, 21 sind zu diesem Zeitpunkt nach oben hin verschwenkt, so daß eine ebene oder auch durch weitere Erhöhung der von der Preßstation 2 abgewandten Stützwalze 21 leicht geneigte Auflagefläche gebildet wird. Durch Öffnen der Rundballenpresse 6 rollt der Rundballen sanft auf das Endlosförderband 11. Sobald der Rundballen auf dem Endlosband 11 aufliegt, wird das Endlosband 11 in Gang gesetzt, so daß der darauf liegende Rundballen 10 zur Mitte des Wickeltisches 8 transportiert wird. Mit Hilfe der DMS-Wägezellen kann errechnet werden, wann sich der Müllballen in der Mitte des Wickeltisches befindet. Während des Transports des Rundballens werden mittels der Stellzylinder 22, 23 die verschwenkbaren Stützwalzen 20, 21 langsam nach unten verschwenkt, so daß sich eine muldenförmige Vertiefung ausbildet. Gleichzeitig mit der Verschwenkung der Stützwalzen 20, 21 wird der Stellzylinder 14 der Längenausgleichseinrichtung verschoben, so daß Endlosband 11 aufgrund der Verschwenkung der Spannwalze 15 weiterhin gespannt bleibt. Das Absenken des Rundballens erfolgt aufgrund der Steuerung der Stützwalzen 20, 21, der Geschwindigkeit des Endlosbandes 11 und der Verstellung der Längenausgleichseinrichtung sehr sanft.

Ist der Rundballen 10 in der gebildeten muldenförmigen Vertiefung 40 an seiner Mantelfläche teilweise von dem Endlosband 11 umschlungen, wird das Endlosband 11 wieder in Bewegung versetzt, so daß sich der darauf befindliche Rundballen 10 in der ausgebildeten Mulde um seine horizontale Achse dreht. Während dieses Vorganges wird der Ausleger 31 der Wickelungseinrichtung 7 gedreht, wodurch eine an sich bekannte vollständige Umwicklung des Rundballens 10 an seiner Mantelfläche und seinen Stirnseiten mit einer Folie erfolgt. Sobald die gewünschte Umwicklung des Rundballens 10 erreicht ist, wird die Folie abgeschnitten. Daraufhin wird der Wickeltisch 8 mit dem nun vollständig umwickelten Rundballen 10 zur Ausgabestation 4 verfahren. Die Ausgabestation 4 umfaßt ein oder mehrere senkrecht zu Verfahrrichtung des Wickeltisches 8 antreibbare Förderbänder. Durch Verschwenkung der Stützrollen 20, 21 mittels der Stellzylinder 22, 23 kann nun sehr sanft der darauf befindliche Rundballen 10 auf das oder die Förderbänder der Ausgabestation 4 ausgegeben werden. Diesbezüglich ist anzumerken, daß durch seitlich nachgeordnete Verschwenkung der der Ausgabestation 4 näherliegenden Stützwalze 21 gegenüber der Stützwalze 20 eine sehr sanfte Ausgabe des Rundballens 10 erfolgt.

In der Ausgabestation 4 wird der Rundballen auf eine Seite der Anlage transportiert und kann von dort mit Greifeinrichtungen oder dergleichen entnommen werden.

Mit den durch die DMS-Wägezellen erhaltenen Meßwerte ist das Gewicht des darauf befindlichen Rundballens errechenbar. Diese Daten können an weitere Steuerungseinrichtungen zur weiteren Verarbeitung weitergegeben werden.

## Patentansprüche

1. Wickeltisch zum Aufnehmen und Drehen eines mit einer Folie zu umwickelnden Rundballens (10) mit
- einem antreibbaren Endloselement (11), das eine Auflagefläche (40, 41) zur Auflage des Rundballens (10) aufweist, und
- zumindest einem unterhalb der Auflagefläche (40, 41) angeordneten Stützelement (20, 21), das bewegbar ist, wodurch die Auflagefläche auch muldenförmig steuerbar ausbildbar ist, oder
- bei dem eine Auswahl von Walzen beabstandet voneinander angeordnet sind, die zur Bildung einer auch muldenförmig ausbildbaren Auflagefläche bewegbar sind.

2. Wickeltisch nach Anspruch 1,
**dadurch gekennzeichnet, daß**
das Endlosband (11) um zumindest zwei Umlaufwalzen (12, 13) geschlungen ist, wovon zumindest eine antreibbar ist.

3. Wickeltisch nach Anspruch 1,
**dadurch gekennzeichnet, daß**
das Stützelement eine anheb- und absenkbare Stützwalze (20, 21) ist.

4. Wickeltisch nach Anspruch 1 oder 3,
**dadurch gekennzeichnet, daß**
das Stützelement (20, 21) an der der Auflagefläche (40, 41) gegenüberliegenden unteren Laufseite anliegt, und durch um einen von der Drehachse des Stützelementes beabstandeten Drehpunkt schwenkbar ist.

5. Wickeltisch nach einem der vorhergehenden Ansprüche,
**dadurch gekennzeichnet, daß**
das Stützelement (20, 21) durch zumindest einen Stellmechanismus, insbesondere einen Stellzylinder (22, 23), inbesondere eines hydraulisch oder pneumatisch betriebenen Stellzylinders, bewegbar ist.

6. Wickeltisch nach einem der vorhergehenden Ansprüche,
**dadurch gekennzeichnet, daß**
zwei voneinander beabstandete Stützelemente (20, 21) zwischen zwei voneinander beabstandeten, stationär angeordneten Stützwalzen (24, 25) angeordnet sind.

7. Wickeltisch nach Anspruch 1,
**dadurch gekennzeichnet, daß**
zumindest eine Längenausgleichseinrichtung (14, 15, 16, 17) am Wickeltisch (8) angeordnet ist.

8. Wickeltisch nach einem der Ansprüche 1 bis 6 und Anspruch
7, **dadurch gekennzeichnet, daß**
die Längenausgleichseinrichtung (14, 15, 16, 17) in Abhängigkeit der Stellung des Stützelementes (20, 21) betätigbar ist.

9. Wickeltisch nach Anspruch 7 oder 8,
**dadurch gekennzeichnet, daß**
die Längenausgleichseinrichtung zumindest eine an der Auflagefläche anliegende, bewegbare Spannwalze (15) umfaßt.

10. Wickeltisch nach den Ansprüchen 8 und 9,
**dadurch gekennzeichnet, daß**
die Spannwalze (15) mittels eines Stellzylinders (14), insbesondere eines pneumatisch oder hydraulisch betreibbaren Stellzylinders, um eine von der Drehachse der Spannwalze (15) beabstandete Drehachse verschwenkbar ist.

11. Wickeltisch nach Anspruch 1,
**dadurch gekennzeichnet, daß**
der Wickeltisch (8) einen unteren, stationären (61) und einen oberen, bewegbaren Rahmen (60) umfaßt und zwischen den Rahmen (60, 61) zumindest ein zur Messung der Auflagekraft dienendes Meßelement angeordnet ist.

12. Wickeltisch nach Anspruch 11,
**dadurch gekennzeichnet, daß**
an mehreren, voneinander beabstandeten Positionen jeweils ein Meßelement angeordnet ist, wobei die muldenförmige Vertiefung (40) zwischen den Meßelementen ausbildbar ist.

13. Wickeltisch nach Anspruch 11 oder 12,
**dadurch gekennzeichnet, daß**
das Stützelement (20, 21) zwischen den Meßelementen angeordnet ist.

14. Wickeltisch nach einem der Ansprüche 7, 8 oder 9 und Anspruch 11,
**dadurch gekennzeichnet, daß**
am oberen Rahmen (60) das bewegbare Stützelement (20, 21) angeordnet ist.

15. Wickeltisch nach einem der Ansprüche 11 bis 14,
**dadurch gekennzeichnet, daß**
das Meßelement eine DMS-Wägezelle ist.

16. Wickeltisch nach Anspruch 1,
**dadurch gekennzeichnet, daß**
der Wickeltisch (8) horizontal bewegbar ist.

17. Wickeltisch nach Anspruch 16,
**dadurch gekennzeichnet, daß**
der Wickeltisch (8) mittels Rollen (51) in Laufschienen (50) bewegbar ist.

18. Müllverpackungsanlage umfassend:
- eine Preßstation (2) zum Verpressen von Müll, insbesondere Hausmüll, Bio-Müll, Klärschlamm oder andere Abfallstoffe, in die Form eines Rundballens (10),
- eine auf die Preßstation (2) folgende Wicklungsstation (3), die eine Wicklungseinrichtung (7) zum Umwickeln des gepreßten Rundballens (10) mit einer Folie und einen Wickeltisch (8) nach einem oder mehreren der vorangehenden Ansprüche umfaßt, und
- einer der Wicklungsstation (3) nachgeordneten Ausgabestation (4).
